# EUROPÄISCHE PATENTSCHRIFT

(11) **EP 3 303 080 B1**
(45) Veröffentlichungstag und Bekanntmachung des Hinweises auf die Patenterteilung: **20.03.2019**
(21) Anmeldenummer: 16721434.5
(22) Anmeldetag: 10.05.2016
(51) Int. Cl.: B60T 13/565

(54) **PNEUMATISCHER BREMSKRAFTVERSTÄRKER**
PNEUMATIC BOOSTER
AMPLIFICATEUR DEFREIN PNEUMATIQUE

(30) Priorität: 28.05.2015 DE 102015209788
(43) Veröffentlichungstag der Anmeldung: 11.04.2018
(73) Patentinhaber: Continental Teves AG & Co. OHG, 60488 Frankfurt am Main (DE)
(72) Erfinder: FALLER, Jürgen, 63796 Kahl (DE)
(86) Internationale Anmeldenummer: PCT/EP2016/060463
(87) Internationale Veröffentlichungsnummer: WO 2016/188737

(56) Entgegenhaltungen:
- EP-A1- 0 062 268
- WO-A1-02/098718
- DE-A1- 10 022 459
- DE-U1- 9 005 629
- FR-A1- 2 443 954

## Beschreibung

Die Erfindung bezieht sich auf einen Pneumatischer Bremskraftverstärker für eine hydraulische Kraftfahrzeugbremsanlage nach dem Oberbegriff des Anspruchs 1.

Derartige Bremskraftverstärker sind weit verbreitet und bilden im Inneren des Verstärkergehäuses durch eine verschiebbare Arbeitswand getrennte Unterdruckkammer und Arbeitskammer aus. Die Verstärkungswirkung beruht dabei auf einer zwischen der beiden Kammern einstellbaren und steuerbaren Druckdifferenzkraft, die die Arbeitswand verschieben lässt und im Folgenden auf eine in Wirkrichtung nachgeschalteten Hauptbremszylinder übermittelt wird.

Bei derartigen gattungsgemäßen Bremskraftverstärkern wird die Trägheit im Ansprechverhalten sowie beim Wiedereinsetzten in den bremsbereiten Zustand als verringerungswürdig angesehen, ebenso wird ein erhöhter Aufwand und Energiebedarf beim Evakuieren der Luft bemängelt.

Es ist vielfach bekannt, beispielsweise aus DE 90 05 629 U1 und DE 100 22 459 A1, eine aus Dünnblech tiefgezogene Rückwand vom Bremskraftverstärker mit diversen Einprägungen und Sicken zu versehen, um insbesondere ihre Elastizität durch Versteifung zu erhöhen, wodurch auch das Ansprechverhalten verbessert wird. Die Trägheit derartiger Systeme wird jedoch nach wie vor als verbesserungswürdig angesehen.

Die Erfindung beruht somit auf der Aufgabe, möglichst kostengünstig einen verbesserten Bremskraftverstärker der eingangsgenannten Art anzubieten, der neben einem verringerten Energiebedarf zur Luftevakuierung verkürzte Ansprech- und Lösezeiten aufweist.

Die Aufgabe wird erfindungsgemäß durch einen Bremskraftverstärker mit der Merkmalskombination nach dem Anspruch 1 gelöst. Unteransprüche zusammen mit Figuren und Beschreibungen geben weitere erfindungsgemäße Ausführungsformen und vorteilhafte Weiterbildungen an.

Zwischen der Rückwand des Verstärkergehäuses und der axial verschiebbaren, annähernd tellerförmig gestalteten Arbeitswand in dessen Inneren ist eine Arbeitskammer ausgebildet

Bei einem unbetätigten Ausganszustand eines betriebsbereiten Bremskraftverstärkers ist die Arbeitskammer mit einer auf der anderen Seite der Arbeitswand liegenden Unterdruckkammer verbunden, so dass in beiden Kammern ein gleicher unterdruckt herrscht. Bei einer Betätigung der Bremskraftverstärkers wird diese Verbindung unterbrochen und in die Arbeitskammer Luft aus der Atmosphäre eingelassen, wobei erst nach einem bestimmten Befüllungsgrad der Arbeitskammer die Verstärkende Wirkung des Bremskraftverstärkers einsetzt.

Beim sogenannten Lösen des Bremskraftverstärkers nach Beendigung einer Bremsung und damit einhergehenden Rücklauf der Arbeitswand wird die Verbindung der Arbeitskammer mit der Atmosphäre wieder unterbrochen und die eingelassene Luft evakuiert. Die Modernen energieeffizienten Fahrzeugantrieben stellen meist nicht ausreichend Unterdruck zur Verfügung, so dass das Evakuieren der Luft durch gesonderte Unterdruckpumpen unter Verbrauch von Energie und damit Effizienzminderung erfolgen muss.

Um eine für die Aufnahme und Übertragung der Druckdifferenzkraft ausreichende Steifigkeit zu besitzen, ist die Arbeitswand im Querschnitt meist wellenförmig oder mit eine Art Knicken, jedenfalls nicht flach oder einfach konisch gestaltet. Dadurch weist die Arbeitskammer zwischen der Rückwand und der Arbeitswand auch im unbetätigten Ausganszustand ein nicht unerhebliches Minimalvolumen auf - auch Totraum oder Verlustraum genannt. Durch vorzugsweise umformtechnisch an der Rückwand des Verstärkergehäuses gestaltete und in Richtung Arbeitswand gerichtete Formation wird dieses Minimalvolumen beziehungsweise Verlustraum sehr effektiv und kosteneffizient reduziert, so das weniger Atmosphärenluft benötigt wird um die Arbeitskammer zu befüllen sowie zu evakuieren. Dadurch wird die zur Initiierung einer Bremskraftverstärkung erforderliche Druckdifferenzkraft schneller erreicht, und damit die Auslösezeit verringert.

Ebenso muss weniger Luft nach einem Bremsvorgang aus dem Bremskraftverstärker evakuiert werden, dies senkt den dazu benötigten Energiebedarf, Der Evakuierungsvorgang kann schneller ablaufen oder es können beispielsweise weniger leistungsfähige und somit leichtere sowie billigere Unterdruckpumpen eingesetzt werden.

Besonders vorteilhaft und effizient kann die Formation als wenigstens eine insbesondere umformtechnisch herstellbare, zur Arbeitswand gerichtete Einprägung in der Rückwand gestaltet sein. Dadurch werden keine gesonderte Zusatzbauteile und keine zusätzliche Prozessschritte bei der er Herstellung des Verstärkergehäuses benötigt, da lediglich das in die Herstellung der Rückwand eingebundene Werkzeug modifiziert werden muss.

Zusätzlich bewirkt die erfindungsgemäße Einprägung in der Rückwand überraschendeweise eine vorteilhafte Versteifung des Verstärkergehäuses. Die Wandstärke und Gewicht vom Verstärkergehäuse können reduziert werden, das Wölben der Rückwand nach außen beim Betrieb des Bremskraftverstärkers wird reduziert oder vermieden, womit geringere Abstände zu den umliegenden Bauteilen im Motorraum eingehalten werden müssten, der Raumbedarf wird verringert.

Des Weiteren kann die Einprägung auch die Herstellung des Verstärkergehäuses effektiver gestalten, da sie beispielsweise zur eindeutigen Positionierung, als Anschlag oder formschlüssige Verdrehsicherung und Derartiges eingesetzt werden kann.

Für einen besonders günstigen Kräfteverlauf im Verstärkergehäuse und eine besonders einfache Herstellbarkeit kann die Einprägung in einer vorteilhaften Weiterbildung sich entlang wenigstens eines Bereichs einer Kreisbahn konzentrisch zur Mittelachse erstreckend gestaltet sein.

In einer ersten erfindungsgemäßen Ausführungsform kann die Formation besonders einfach herstellbar und in Bezug auf die Volumenreduktion besonders effizient als eine einzelne zusammenhängende kreisförmige Einprägung ausgebildet sein.

Nach einer weiteren erfindungsgemäßen Ausführung können jedoch mehrere voneinander isolierte Einprägungen mit einem bestimmten Winkelversatz um die Mittelachse zueinander entlang der Kreisbahn angeordnet sein. Dadurch werden zwischen den einzelnen Einprägungen eine Art Stege gebildet, womit die Rückwand in einem höheren Maße versteift sowie der Kraftfluss weiter optimiert wird.

In einer Weiterbildung der Erfindung können die Einprägungen entlang von zwei oder noch mehr radial zueinander beabstandeten konzentrischen Kreisbahnen ausgebildet sein. Dadurch kann die Rückwand in ihrem Querschnittsprofil besonders effektiv dem Querschnittsprofil der Arbeitswand angenähert werden, die Volumenreduktion damit erhöht. Auch die Steifigkeit wird weiter verbessert und die Wölbungsneigung der Rückwand reduziert.

In einer besonders bevorzugten erfindungsgemäßen Ausführung können auf jeder Kreisbahnen jeweils vier voneinander isolierte und gleichmäßig, insbesondere symmetrisch zueinander winkelversetzte Einprägungen ausgebildet sein. Durch die daraus ergebende gleichmäßiger Kräfteverlauf kann konstruktiv besonders effektiv an die Lage der Verbindungselementen angepasst werden, wodurch die Wandstärke und das Gewicht des Verstärkergehäuses ohne Steifigkeitsverlust weiter reduziert werden können.

In einer weiteren vorteilhaften Ausführung ist die Formnation derart ausgelegt und gestaltet, dass die Verringerung des Minimalvolumens der Arbeitskammer im Vergleich mit einer Ausführung ohne der erfindungsgemäße zwischen 33 und 50 Prozent beträgt. Dadurch kann die Trägheit des Bremskraftverstärkers effektiv verringert werden, ohne dass das Strömungsverhalten in der Arbeitskammer und die konstruktive Gestaltung des Bremskraftverstärkers - beispielsweise in Bezug auf erforderlichen Arbeitsabstände und Raumbedarf für Konstruktionselemente - negativ beeinflusst sind.

Eine andere erfindungsgemäße Ausführung sieht vor, dass die Formation als wenigstens ein gesondertes, separates Bauteil ausgebildet ist, welches innerhalb der Arbeitskammer angeordnet und auf der Rückwand befestigt ist. Dadurch können bereits vorhandene Bremskraftverstärkermodelle einfach und kostengünstig, ohne oder mit nur minimalen Werkzeugänderungen modifiziert oder nachgerüstet werden.

Im Folgenden soll die Erfindung näher erläutert werden. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen. Es ist weiter zu beachten, dass die Erfindung sowohl an einem Single-, als auch einem Tandem-Bremskraftverstärker anwendbar ist.

Im Einzelnen zeigt die
Fig.1 Die Teilansicht der Rückseite eines bekannten pneumatischen Bremskraftverstärkers mit einer glatten kegelig ausgebildeten Rückwand des Verstärkergehäuses in perspektivischer Darstellung (a), sowie eine zugehörige Teilansicht im Querschnitt X-X (b).
Fig.2 Eine erfindungsgemäße Ausführungsform eines verbesserten Bremskraftverstärkers in äquivalenten zu der Fig.1 Ansichten (a,b)
Fig.3 bis 6 beispielhaft die Rückansichten weiteren erfindungsgemäßen Ausführungsformen des Bremskraftverstärkers in stark vereinfachter Darstellung.
Fig. 7 Eine andere erfindungsgemäße Ausführungsform mit innerhalb der Arbeitskammer angeordneten und an der Rückwand befestigten gesonderten Bauteilen.

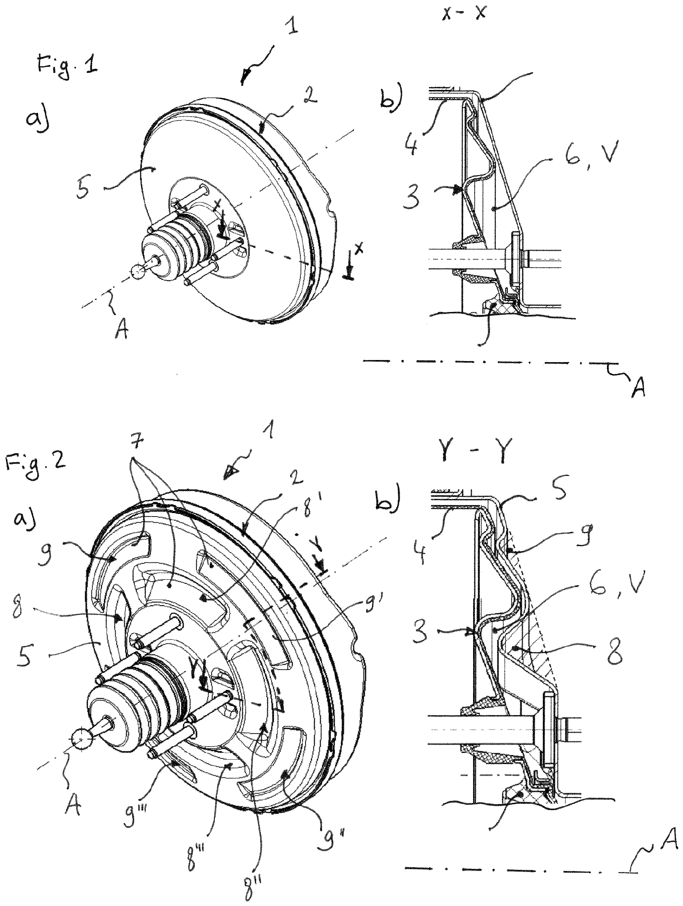

In der Fig. 1 in der Ansicht a) ist ein rückwärtiger Bereich einer bekannten Ausführungsform eines gattungsgemäßen pneumatischen Bremskraftverstärkers 1 dargestellt.

Das annähernd zylinderförmige Gebilde 14 in der Mitte beinhaltet im Wesentlichen eine hier nicht gezeigte Anordnung zur Betätigung und Steuerung des Bremskraftverstärkers 1. In einem radial innen sowie orthogonal zur Mittelachse A am Verstärkergehäuse 2 ausgebildeten planaren Wandabschnitt 15 sind 4 Befestigungsmittel radial um die Mittelachse A in einem Winkelversatz von jeweils 90° zueinander versetzt angeordnet. Die Befestigungsmittel dienen zu Befestigung des Bremskraftverstärkers 1 am Fahrzeug und sind in der dargestellten Ausführung durch je zwei Schrauben 16 und je zwei, das Verstärkergehäuse 2 beidseitig durchdringenden Zugankerbolzen 17 vertreten. Abweichende Zahl oder Art von Befestigungsmitteln sind jedoch innerhalb der Erfindung ebenfalls zulässig.

Das Verstärkergehäuse 2 des bekannten Bremskraftverstärkers 1 verfügt über eine leicht kegelig ausgebildete Rückwand 5 mit einer glatten, ebenen Oberfläche.

Die Ansicht b) zeigt einen Teilschnitt X-X durch das Verstärkergehäuse 2 aus der Ansicht a) im Bereich der Rückwand 5 bei einem unbetätigten Ausganszustand des betriebsbereiten Bremskraftverstärkers 1.

Im Inneren des Verstärkergehäuses 2 ist eine Arbeitswand 4 axial entlang der Mittelachse A begrenzt verschiebbar angeordnet. Die Arbeitswand 4 ist im Wesentlichen ring- beziehungsweise tellerförmig mit einem zentralen Durchbruch ausgebildet und ist radial innen mit einem Steuergehäuse 19 luftdicht gekoppelt. Eine Rollmembrane 4 liegt an der Arbeitswand 3 an ihrer der Rückwand 5 zugewandten Seite an und dichtet radial außen an einer hier nicht gezeigten Stelle gegen das Verstärkergehäuse 2 ab.

Dadurch wird in dem Verstärkergehäuse 2 im Bereich zwischen der Arbeitswand 3 und der Rückwand 5 eine Arbeitskammer 6, und auf der gegenüberliegenden Seite der Arbeitswand 3 eine Unterdruckkammer 18 begrenzt. Die beiden Kammern 6, 18 sind über ein hier nicht gezeigtes Kanalsystem innerhalb des Steuergehäuses 19 verbunden, wobei diese Verbindung mittels wenigstens einer hier ebenfalls nicht dargestellten Ventilanordnung geöffnet und geschlossen wird.

Zwecks eine schadfreien Aufnahme und einer verlustfreien Übertragung einer zwischen der Unterdruckammer 18 und der Arbeitskammer 6 im Betrieb einstellbaren Druckdifferenzkraft ist die Arbeitswand 3 in ihrem Querschnitt wellenförmig gestaltet, um ihre Biegesteifigkeit zu vergrößern.

In dem hier gezeigten unbetätigten Ausganszustand ist die Arbeitswand 3 auf Anschlag in Richtung Rückwand 5 verschoben. In diesem Betriebszustand weist die Arbeitskammer 6 ihr kleinstmögliches Minimalvolumen V auf.

Bei einer Bremsung wird die Arbeitswand 3, getrieben durch eine zwischen den Kammern 6 und 18 erzeigte Druckdifferenzkraft, weg von der Rückwand 5 verschoben, so dass das Volumen der Arbeitskammer 6 sich verändert und größer als das Minimalvolumen V wird. Bei einem solchen Vorgang wird Atmosphärenluft in die Arbeitskammer 6 eingelassen, die nach Beendigung der Bremsung wieder evakuiert werden muss. Damit die Arbeitswand mit einer kraftverstärkenden Wirkung in Richtung Unterdruckkammer 18 sich zu verschieben beginnt, muss ein Mindestschwellwert bei der Druckdifferenz zwischen den Kammern 6 und 18 überschritten werden. Dabei gilt, dass je größer das Mindestvolumen V ist, umso mehr Atmosphärenluft in die Arbeitskammer eingelassen werden muss, um den vorgenannten Mindestschwellwert zu erreichen, umso länger dauert es und umso träger ist das Ansprechverhalten des Bremskraftverstärkers 1. Sinngemäß gilt, dass umso mehr Luft aus dem Bremskraftverstärker 1 nach dem Lösen der Bremse wieder evakuiert werden muss, umso länger dauert es, bis der bremsbereite Ausgangszustand erreicht ist.

Ein in der Fig. 2 in den jeweils gleichen Ansichten wie in der Fig.1 dargestellter erfindungsgemäßer Bremskraftverstärker 1 weist um Unterschied zu der vorstehen beschriebenen bekannten Ausführung an seiner Rückwand 5 eine Formation 7, die einer Verringerung des Minimalvolumens V der Arbeitskammer 6 dient.

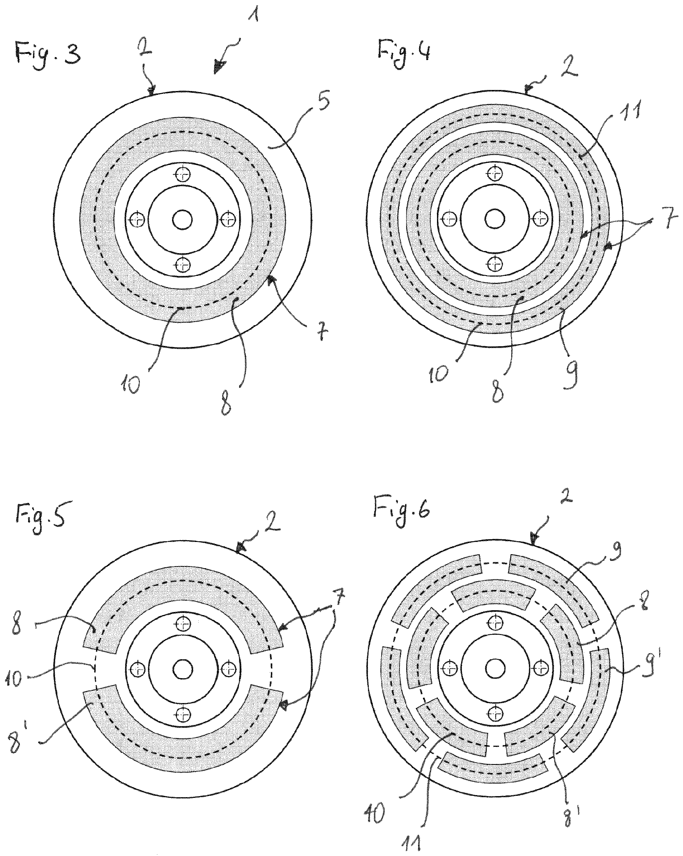

Die Rückwand 5 ist nicht mehr glatt gestaltet, sondern verfügt über mehrere Einprägungen 8,8'... bzw. 9,9'... die in Richtung Arbeitswand 3 gerichtet ausgebildet sind. In der gezeigten ersten erfindungsgemäßen Ausführungsform sind in der Rückwand 5 jeweils 4 Einprägungen 8, 8', 8", 8''' beziehungsweise 9, 9', 9", 9''' entlang von jeweils zwei radial zueinander beabstandeten koaxialen Kreisbahnen angeordnet. Abweichende Anordnungen und Anzahl der Einprägungen sind innerhalb der Erfindung zulässig, hierzu sei insbesondere auf die Fig.3-6 verwiesen, wo verschiedene Anordnungsprinzipien verdeutlicht sind. Die Einprägungen 8,... 9,... wird die Biegesteifigkeit der Rückwand 5 erhöht. Weil die Einprägungen - beispielsweise 8, 8', 8", 8''' - voneinander isoliert und in einem Winkelversatz zueinander angeordnet sind, bildet sich zwischen zwei jeweils benachbarten Einprägungen - beispielsweise 8''' und 8" - jeweils eine Art Steg 12. Dadurch wird die Biegesteifigkeit der Rückwand 5 weiter erhöht.

Durch ein geeignetes Pattern von Einprägungen und Stegen in der Rückwand 5 kann der Kraftverlauf in der Rückwand gezielt beeinflusst werden um beispielsweise Spannungen in den Kraftangriffspunkten zu reduzieren.

Die Wirkungsweise der Einprägungen 8,... 9,... ist im Schnittbild Y-Y in der Ansicht b) verdeutlicht. Die gestrichelte Linie 20 zeigt dabei zum Vergleich eine imaginäre Kontur eines nicht verbesserten, und bis auf die Formation 7 bzw. die Einprägungen 8,..., 9,... gleichen Bremskraftverstärkers 1.

Durch die Einprägungen 8,9 ist die Rückwand 5 in ihrem Querschnitt bereichsweise dem Querschnitt der Arbeitswand 3 angenähert ausgebildet. Dadurch ist das Minimalvolumen V gegenüber einer bekannten Ausführung deutlich verringert. Dabei muss jedoch darauf geachtet werden, das die Atmosphärenluft möglichst ungehindert zwischen der Rückwand 5 und der Arbeitswand 5 einströmen und sich verteilen kann, damit die gesamte Oberfläche der Arbeitswand 3 möglichst schnell und gleichmäßig mit der Druckdifferenzkraft beaufschlagt wird.

Ebenso muss auf einen ausreichenden Abstand zwischen der Arbeitswand 3 und dem Verstärkergehäuse 2 im Allgemeinen geachtet werden, damit im Betrieb zu keinen zusätzlichen Geräuschemissionen durch das Aufeinanderstoßen mit der Arbeitswand 3 aufgrund von betriebsbedingten Vibrationen und Verformungen kommt. Vor diesem Hintergrund soll die Reduktion des Minimalvolumens V (gegenüber einer Vergleichsausführung mit einem linearen Querschnittsverlauf der Rückwand 5 entsprechend der Linie 20) mindestens 25% und besonders bevorzugt zwischen 33% und 50% betragen.

Die Fig.3 bis 6 zeigen in einer vereinfachten Darstellung unterschiedliche Anordnungen der Einprägungen 8,..., 9,... auf der Rückwand 5. Der Bremskraftverstärker 1 ist dabei jeweils in der Rückansicht gezeigt. Eine geeignete Auslegung der erfindungsgemäßen Formation 7 ist dabei im Wesentlichen bedingt durch die Querschnittskontur der Arbeitswand 3 in der jeweiligen konkreten Bremskraftverstärker-Applikation.

In der erfindungsgemäßen Ausführungsform nach Fig.3 ist die Formation 7 als eine einzelne, radial umlaufende, zusammenhängende Einprägung 8 in der Rückwand 5 ausgebildet. Die Einprägung 8 verläuft auf einer Kreisbahn 10 konzentrisch zu der Mittelachse A.

Die erfindungsgemäße Ausführungsform nach der Fig.4 weist im Unterschied zu der Ausführung nach der Fig.3 zwei radial umlaufende Einprägungen 8, 9 statt nur einer. Die Einprägungen 8, 9 verlaufen auf zwei radial zueinander beabstandeten konzentrischen Kreisbahnen 10 und 11. Innerhalb der Erfindung können ebenso mehr als zwei konzentrische Kreisbahnen mit darauf verlaufenden Einprägungen vorgesehen sein.

In der erfindungsgemäße Ausführungsform nach der Fig.5 sind auf einer einzelnen Kreisbahn 10 zwei voneinander durch Stege 12, 12' getrennte beziehungsweise in einem Winkelversatz zueinander angeordnete Einprägungen 8,8' vorgesehen. In der gezeigten Ausführung sind die Einprägungen 8 und 8' spiegelsymmetrisch gestaltet, um einen gleichmäßigen Kraftfluss durch die Rückwand 5 zu realisieren.

In der erfindungsgemäße Ausführungsform nach der Fig.6 sind auf zwei konzentrischen, radial beabstandeten Kreisbahnen 10, 11 jeweils 5 voneinander durch Stege 12,13 unterbrochene beziehungsweise in einem Winkelversatz zueinander angeordneten Einprägungen 8,8'..., 9,9'... ausgebildet.

Mit anderen Worten stellt die gezeigte Ausführung eine Weiterbildung der Ausführung nach Fig. 4 dar, bei der die umlaufenden Einprägungen 8,9 durch Stege 12, 13 in mehrere isolierte Einprägungen 8,8'..., 9,9'... unterbrochen sind.

Die Anzahl von 5 Einprägungen auf einer einzelnen Kreisbahn ist dabei nur beispielhaft, innerhalb der Erfindung kann auf jeder Kreisbahn eine abweichende Zahl von Einprägungen vorgesehen sein.

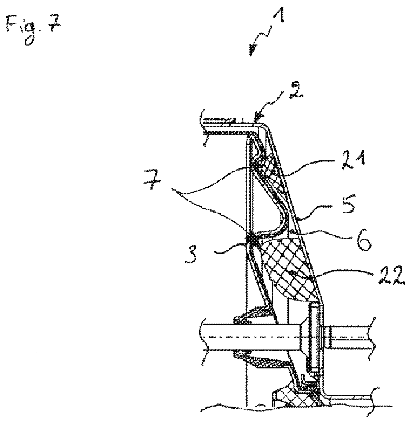

Die Fig.7 zeigt im Querschnitt (äquivalent zu Ansicht Fig.2b) eine andere erfindungsgemäße Ausführungsform des Bremskraftverstärkers 1. Die Formation 7 ist hier nicht als in der Rückwand 5 ausgebildete Einprägungen, sondern durch gesonderte, separate, weitgehend ringförmige Bauteile 21 und 22 ausgestaltet. Die Bauteile 21 und 22 sind in der Arbeitskammer 6 radial zueinander beabstandet angeordnet und an der Rückwand 5 lediglich fixiert. In ihren Querschnitten sind die Bauteile 21, 22 entsprechend dem jeweils komplementären Querschnittabschnitt der Arbeitswand 3 beziehungsweise der Rückwand 5 angepasst. Je dach konkreten Voraussetzungen können innerhalb der Erfindung auch nur ein, aber auch mehr als zwei Bauteile 21, 22 eingesetzt werden.

### Bezugszeichenliste

- 1: Bremskraftverstärker
- 2: Verstärkergehäuse
- 3: Arbeitswand
- 4: Rollmembrane
- 5: Rückwand
- 6: Arbeitskammer
- 7: Formation
- 8: Einprägung
- 9: Einprägung
- 10: Kreisbahn
- 11: Kreisbahn
- 12: Steg
- 13: Steg
- 14: Gebilde
- 15: Wandabschnitt
- 16: Schraube
- 17: Zugankerbolzen
- 18: Unterdruckkammer
- 19: Steuergehäuse
- 20: Linie
- A: Mittelachse
- V: Minimalvolumen

## Patentansprüche

1. Pneumatischer Bremskraftverstärker (1) für eine hydraulische Kraftfahrzeugbremsanlage, mit einem Verstärkergehäuse (2), wenigstens einer in dem Verstärkergehäuse (2) der entlang einer Mittelachse (A) begrenzt verschiebbaren Arbeitswand (3), wobei die Arbeitswand (3) sich im Wesentlichen radial zur Mittelachse (A) erstreckt und eine Rollmembrane (4) zur Abdichtung gegen das Verstärkergehäuse (2) umfasst und wobei zwischen der Arbeitswand (3) und einer Rückwand (5) des Verstärkergehäuses (2) eine Arbeitskammer (6) begrenzt ist, wobei in einem bremsbereiten ungebremsten Ausgangszustand des Bremskraftverstärkers (1) in der Arbeitskammer (6) ein Unterdruck vorliegt und die Arbeitskammer (6) dabei einen Minimalvolumen (V) aufweist und wobei die Arbeitskammer (6) zur Verstärkung der Bremskraft bei einer Bremsung mit einer Umgebungsatmosphäre verbindbar ist, **dadurch gekennzeichnet, dass** die Rückwand (5) wenigstens eine Formation (7) zur Verringerung des Minimalvolumens (V) der Arbeitskammer (6) aufweist, wobei die Verringerung des Minimalvolumens (V) durch die Formation (7) mindestens 25% beträgt, bezogen auf eine Vergleichsausführung mit einer glatten Rückwand (5) ohne Formation (7).

2. Bremskraftverstärker (1) nach Anspruch 1, **dadurch gekennzeichnet, dass** die Formation (7) als wenigstens eine Einprägung (8) in der Rückwand (5) gestaltet ist, die zur Arbeitswand (6) gerichtet ist.

3. Bremskraftverstärker (1) nach Anspruch 2, **dadurch gekennzeichnet, dass** die Einprägung (8) sich entlang wenigstens eines Bereichs einer Kreisbahn (10) konzentrisch zur Mittelachse (A) erstreckt.

4. Bremskraftverstärker (1) nach Anspruch 3, **dadurch gekennzeichnet, dass** wenigstens zwei Einprägungen (8,9) auf wenigstens zwei radial zueinander beabstandeten konzentrischen Kreisbahnen (10, 11) angeordnet sind.

5. Bremskraftverstärker (1) nach Anspruch 3, **dadurch gekennzeichnet, dass** die Formation (7) als eine einzelne zusammenhängende Einprägung (8) gestaltet ist.

6. Bremskraftverstärker (1) nach Anspruch 3 oder 4, **dadurch gekennzeichnet, dass** auf wenigstens einer Kreisbahn (10, 11) wenigstens zwei voneinander isolierte Einprägungen (8, 8' und/oder 9, 9') mit einem Winkelversatz um die Mittelachse (A) zueinander angeordnet sind.

7. Bremskraftverstärker (1) nach Anspruch 6, **dadurch gekennzeichnet, dass** auf jeder Kreisbahnen (10, 11) jeweils vier voneinander isolierte Einprägungen (8, 8', 8", 8''', 9, 9', 9", 9''') angeordnet sind.

8. Bremskraftverstärker (1) nach Anspruch 1, **dadurch gekennzeichnet, dass** die Formation (7) als wenigstens ein gesondertes Bauteil (21, 22) ausgebildet ist, welches in der Arbeitskammer 6 angeordnet an der Rückwand 5 befestigt ist.

## Claims

1. Pneumatic brake booster (1) for a hydraulic motor vehicle brake system, having a booster housing (2) and at least one operating wall (3) which can be displaced to a limited extent in the booster housing (2) along a center axis (A), the operating wall (3) extending substantially radially with respect to the center axis (A) and comprising a roller diaphragm (4) for sealing against the booster housing (2), and an operating chamber (6) being delimited between the operating wall (3) and a rear wall (5) of the booster housing (2), there being a vacuum in the operating chamber (6) in a brake-ready, unbraked starting state of the brake booster (1), and the operating chamber (6) having a minimum volume (V) here, and it being possible for the operating chamber (6) to be connected to a surrounding atmosphere during a braking operation in order to boost the braking force, **characterized in that** the rear wall (5) has at least one formation (7) for reducing the minimum volume (V) of the operating chamber (6), the reduction in the minimum volume (V) by way of the formation (7) being at least 25%, in relation to a comparative embodiment having a smooth rear wall (5) without a formation (7).

2. Brake booster (1) according to Claim 1, **characterized in that** the formation (7) is designed as at least one indented portion (8) in the rear wall (5), which indented portion (8) is directed toward the operating wall (6).

3. Brake booster (1) according to Claim 2, **characterized in that** the indented portion (8) extends along at least one region of a circular path (10) concentrically with respect to the center axis (A).

4. Brake booster (1) according to Claim 3, **characterized in that** at least two indented portions (8, 9) are arranged on at least two concentric circular paths (10, 11) which are spaced apart radially from one another.

5. Brake booster (1) according to Claim 3, **characterized in that** the formation (7) is designed as a single contiguous indented portion (8).

6. Brake booster (1) according to Claim 3 or 4, **characterized in that** at least two indented portions (8, 8' and/or 9, 9') which are isolated from one another are arranged on at least one circular path (10, 11) at an angular offset about the center axis (A) from one another.

7. Brake booster (1) according to Claim 6, **characterized in that** in each case four indented portions (8, 8', 8", 8''', 9, 9', 9", 9''') which are isolated from one another are arranged on each circular path (10, 11).

8. Brake booster (1) according to Claim 1, **characterized in that** the formation (7) is configured as at least one separate component (21, 22) which, arranged in the operating chamber 6, is fastened to the rear wall 5.

## Revendications

1. Amplificateur de force de freinage pneumatique (1) pour une installation de frein hydraulique de véhicule automobile, avec un boîtier d'amplificateur (2), au moins une paroi de travail (3) déplaçable de façon limitée le long d'un axe central (A) dans le boîtier d'amplificateur (2), dans lequel la paroi de travail (3) s'étend essentiellement radialement à l'axe central (A) et comprend une membrane roulante (4) pour l'étanchéité à l'égard du boîtier d'amplificateur (2) et dans lequel une chambre de travail (6) est limitée entre la paroi de travail (3) et une paroi arrière (5) du boîtier d'amplificateur (2), dans lequel dans un état initial non freiné prêt à freiner de l'amplificateur de force de freinage (1) il règne une dépression dans la chambre de travail (6) et la chambre de travail (6) présente en l'occurrence un volume minimal (V) et dans lequel la chambre de travail (6) peut être reliée à une atmosphère environnante pour l'amplification de la force de freinage lors d'un freinage, **caractérisé en ce que** la paroi arrière (5) présente au moins une formation (7) destinée à réduire le volume minimal (V) de la chambre de travail (6), dans lequel la réduction du volume minimal (V) par la formation (7) vaut au moins 25 %, rapportée à une réalisation de comparaison avec une paroi arrière lisse (5) sans formation (7).

2. Amplificateur de force de freinage (1) selon la revendication 1, **caractérisé en ce que** la formation (7) est réalisée sous la forme d'au moins un enfoncement (8) dans la paroi arrière (5), qui est dirigé vers la paroi de travail (6).

3. Amplificateur de force de freinage (1) selon la revendication 2, **caractérisé en ce que** l'enfoncement (8) s'étend le long d'au moins une région d'une trajectoire circulaire (10) concentrique à l'axe central (A).

4. Amplificateur de force de freinage (1) selon la revendication 3, **caractérisé en ce qu'**au moins deux enfoncements (8, 9) sont disposés sur au moins deux trajectoires circulaires concentriques (10, 11) radialement espacées l'une de l'autre.

5. Amplificateur de force de freinage (1) selon la revendication 3, **caractérisé en ce que** la formation (7) est réalisée par un seul enfoncement continu (8).

6. Amplificateur de force de freinage (1) selon la revendication 3 ou 4, **caractérisé en ce qu'**au moins deux enfoncements isolés l'un de l'autre (8, 8' et/ou 9, 9') sont disposés sur au moins une trajectoire circulaire (10, 11) avec un décalage angulaire l'un par rapport à l'autre autour de l'axe central (A).

7. Amplificateur de force de freinage (1) selon la revendication 6, **caractérisé en ce que** chaque fois quatre enfoncements isolés l'un de l'autre (8, 8', 8", 8''', 9, 9', 9", 9''') sont disposés sur chaque trajectoire circulaire (10, 11).

8. Amplificateur de force de freinage (1) selon la revendication 1, **caractérisé en ce que** la formation (7) est réalisée sous la forme d'au moins un composant séparé (21, 22), qui est disposé dans la chambre de travail (6) et fixé à la paroi arrière (5).
